# EUROPÄISCHE PATENTSCHRIFT

(11) **EP 0 372 111 B1**
(45) Veröffentlichungstag und Bekanntmachung des Hinweises auf die Patenterteilung: **07.09.1994**
(21) Anmeldenummer: 88120402.8
(22) Anmeldetag: 07.12.1988
(51) Int. Cl.: H05B 3/03

(54) **Elektrode für einen Glasschmelzofen**
Electrode for a glass melting furnace
Electrode pour un four de fusion du verre

(43) Veröffentlichungstag der Anmeldung: 13.06.1990
(73) Patentinhaber: BETEILIGUNGEN SORG GMBH & CO. KG, D-97816 Lohr am Main (DE)
(72) Erfinder: Sorg, Helmut, Dipl.-Ing., D-8752 Glattbach (DE); Pieper, Helmut, Dipl.-Ing., D-8770 Lohr/Main (DE); Kessel, Rudolf, D-8770 Lohr/Main (DE)
(74) Vertreter: Schulze Horn, Stefan, Dipl.-Ing. M.Sc.

(56) Entgegenhaltungen:
- EP-A- 012 573
- WO-A-83/00144
- DE-B- 1 127 546
- FR-A- 984 225
- FR-A- 1 557 329
- FR-A- 2 350 309
- FR-A- 2 599 734
- US-A- 3 354 256
- US-A- 4 168 392
- US-A- 4 468 779

## Beschreibung

Die Erfindung betrifft eine Elektrode für einen Glasschmelzofen, welche aus einem von außen her oberhalb der Glasschmelze in das Innere des Glaschmelzofens einzuführenden metallischen Elektrodenschaft und einem mit dem ofeninneren Ende des Schaftes verbundenen, z.B. verschraubten, zum größten Teil in die Glasschmelze im Glasschmelzofen einzutauchenden Elektrodenkörper aus hochhitzebeständigem Metall, wie Molybdän, Platin, Wolfram oder deren Legierungen, besteht, wobei der Elektrodenschaft ofenaußenseitig an eine Stromquelle anschließbar ist, wobei der Elektrodenschaft hohl als Rohr ausgebildet ist, wobei im hohlen Inneren des Elektrodenschaftes ein Kühlflüssigkeitsrohr verläuft, durch welches eine Kühlflüssigkeit von außen her zum ofeninneren Ende des Elektrodenschaftes führbar ist, wobei die Kühlflüssigkeit durch einen zwischen der Außenseite des Kühlflüssigkeitsrohres und der Innenseite des Elektrodenschaftes gebildeten Zwischenraum rückleitbar ist.

Eine Elektrode der genannten Art ist aus der DE-A-3 207 250 bekannt. Bei der Elektrode gemäß DE-A-3 207 250 besteht das äußere der beiden koaxialen Rohre des Elektrodenschaftes ebenso wie der Elektrodenkörper aus einem hochhitzebeständigen Metall, wie Molybdän, Wolfram, Platin oder deren Legierungen, was zu hohen Material- und Herstellungskosten und damit zu hohen Gesamtkosten für die Elektrode und zu hohen Glasschmelzofen-Betriebskosten führt. Außerdem ist hier der Schaft aufgrund der Sprödigkeit des verwendeten Materials mechanisch nur begrenzt belastbar, was durch entsprechende gewichtserhöhende Materialstärken ausgeglichen werden muß. Weiterhin ist bei dieser bekannten Elektrode der Elektrodenkörper als kurzer Zylinder mit relativ großem Durchmesser ausgebildet. Dies ergibt zwar eine gute Haltbarkeit des Elektronenkörpers, führt jedoch dazu, daß der Strom im wesentlichen punktförmig in die Glasschmelze eingespeist wird. Diese punktförmige Stromeinspeisung ergibt in der Glasschmelze eine ungleichmäßige Energiezufuhr und Temperaturverteilung, was ungünstig für den Schmelzvorgang ist.

Auch bei der US-A-4 468 779 sind zwei koaxiale Rohre für den Elektrodenschaft vorgesehen, wobei hier das innere Rohr, das als Kühlflüssigkeitsrohr dient, aus Kupfer und das äußere Rohr aus Stahl besteht. Der Rücklauf für die Kühlflüssigkeit ist hier zwischen der Außenseite des inneren Rohres aus Kupfer und der Innenseite des äußeren Rohres aus Stahl gebildet; es liegt also ein für die Kühlung des Elektrodenschaftes erforderlicher Freiraum zwischen dem Rohr aus Stahl und dem Rohr aus Kupfer vor.

Diese Konstruktion hat insbesondere den Nachteil, daß die Herstellung der elektrischen Verbindung zwischem dem inneren, relativ kleindimensionierten Kupferrohr und dem Elektrodenkörper schwierig ist und daß eine Kühlung des Elektrodenkörpers in seinem Anschlußbereich nicht möglich ist. Daher kann diese Elektrode auch nur so eingesetzt werden, daß neben dem Elektrodenkörper auch noch ein Teil des Elektrodenschaftes in die Glasschmelze eintaucht. Zudem ist diese Elektrodenkonstruktion für eine Glasschmelze weniger geeignet, weil insbesondere bei hohen elektrischen Spannungen, die in einer Glasschmelze benötigt werden, der Strom zum großen Teil über die Ecken am Ende des stählernen äußeren Rohres des Elektrodenhalters fließt, was zu Schäden und sogar zu Zerstörungen an dem Elektrodenhalterende führen kann.

Es stellt sich daher die Aufgabe, eine Elektrode der eingangs genannten Art zu schaffen, die sowohl kostengünstiger ist als auch verbesserte betriebliche Eigenschaften aufweist.

Die Lösung dieser Aufgabe gelingt erfindungsgemäß durch eine Elektrode der eingangs genannten Art, welche dadurch gekennzeichnet ist, daß Elektrodenschaft als Koaxialrohr mit einem Innenrohr aus einem einen guten elektrischen Leiter darstellenden Metall und mit einem Außenrohr aus einem mechanisch widerstandsfähigen, hitzebeständigen Metall ausgebildet ist, wobei der Zwischenraum für die Rückleitung der Kühlflüssigkeit zwischen der Außenseite des Kühlflüssigkeitsrohres und der Innenseite des Innenrohres gebildet ist.

Die neue Elektrode bietet zugleich eine hohe mechanische Belastbarkeit und eine verlustarme Stromleitung, da für jeden der beiden Zwecke die Verwendung eines jeweils besonders geeigneten Metalls vorgesehen ist. Aufgrund dieser Kombination müssen bei der neuen Elektrode keine Kompromisse hinsichtlich der Anforderungen an die mechanische Belastbarkeit einerseits und die Güte der Stromleifähigkeit andererseits mehr eingegangen werden.

Bevorzugt ist vorgesehen, daß das Innenrohr aus Kupfer oder Kupferlegierung und das Außenrohr aus Stahl oder Stahllegierung besteht. Diese Metalle weisen die jeweils geforderten Eigenschaften, nämlich gute Stromleitfähigkeit einerseits und hohe mechanische Belastbarkeit andererseits, auf und sind zudem kostengünstig sowie einfach verarbeitbar.

Zur Sicherstellung einer mechanisch dauerhaft haltbaren Verbindung und einer störungs- und verlustfreien Stromübertragung zwischen Elektrodenschaft und Elektrodenkörper ist vorgesehen, daß im Verbindungsbereich von Elektrodenschaft und Elektrodenkörper das Innenrohr des Elektrodenschaftes mit einer Innenkonusfläche und das zugehörige Ende des Elektrodenkörpers mit einer gegengeformten Außenkonusfläche ausgebildet ist.

Um den in mechanischer Hinsicht das schwächste Glied darstellenden Übergangsbereich vom Elektrodenschaft zum -körper gegen thermische Überlastung und daraus folgende Materialschädigungen und -schwächungen zu schützen, sieht die Erfindung vor, daß der Elektrodenkörper eine von seiner dem Elektrodenschaft zugewandten Stirnseite ausgehende, sich über einen Teil der Länge des Elektrodenkörpers in diesen hinein erstreckende Bohrung aufweist und daß ein durch das hohle Innere des Elektrodenschaftes verlaufendes Kühlflüssigkeitsrohr bis in die Bohrung im Elektrodenkörper geführt und dort im Abstand vom Boden der Bohrung endend als Kühlflüssigkeitsauslaß ausgebildet ist. Außerdem wird durch die Kühlung des Verbindungsbereiches die Möglichkeit geschaffen, den Elektrodenkörper auch noch nach monatelangem Betriebseinsatz im Glasschmelzofen problemlos und zerstörungsfrei wieder vom Elektrodenschaft abzubauen, insbesondere abzuschrauben. Ein Festbrennen oder Verbacken von Elektrodenkörper und -schaft im Verbindungsbereich wird so sicher ausgeschlossen und der Anbau von neuen Elektrodenkörpern an die Elektrodenschäfte eines Glasschmelzofens wird stark vereinfacht bzw. überhaupt erst ermöglicht.

Zwecks Stabilisierung der Elektrode und zur Erleichterung der Montage des Elektrodenkörpers an dem Elektrodenschaft ist vorgesehen, daß unmittelbar vor dem Verbindungsbereich von Elektrodenkörper und Elektrodenschaft in dessen hohles Innere eine Lochplatte fest eingesetzt ist, die eine zentrale, das Kühlflüssigkeitsrohr zentrierend führende Öffnung sowie mehrere darum verteilt angeordnete Durchlaßöffnungen für die rücklaufende Kühlflüssigkeit aufweist.

Da sich in der Praxis gezeigt hat, daß bei von oben her in die Glasschmelze eintauchenden Elektroden etwa in Höhe des Glasschmelzespiegels die größte Elektrodenabnutzung auftritt, ist bei der Elektrode gemäß Erfindung vorgesehen, daß der Elektrodenkörper eine länglich-plattenförmige oder länglich-zylindrische Grundform aufweist und in der Umgebung des Körperbereiches, der im Betrieb der Elektrode im Glasschmelzofen in Höhe des Glasschmelzespiegels zu liegen kommt, eine Verdickung aufweist. Die Verdickung kann dabei unterschiedliche Formgebungen haben; in den Ansprüchen 7 und 8 sind bevorzugte Ausgestaltungen der Verdickung angegeben.

Wahlweise kann dabei der Elektrodenkörper aus wenigstens zwei miteinander verbundenen Elektrodenkörperteilen unterschiedlicher Dicken bzw. Durchmesser zusammengesetzt sein. Diese Bauweise ermöglicht ein Baukastensystem, mit welchem unterschiedliche Elektroden aus relativ wenigen Teilen und mit sehr geringem Herstellungsaufwand für unterschiedliche Einsatzzwecke zusammengestellt werden können. Außerdem können abgenutzte Elektrodenkörper beliebig oft von Zeit zu Zeit durch einen neuen, vorzugsweise verdickten Elektrodenkörperteil wieder ergänzt werden. Dabei wird zweckmäßig der neue Teil nach Abnehmen des abgenutzten, d. h. dünner und kürzer gewordenen Elektrodenkörpers vom Elektrodenschaft zwischen diesen und den alten Elektrodenkörper zur Bildung eines erneut einsetzbaren Elektrodenkörpers eingefügt. Die Elektrodenkörper können damit im Idealfall vollständig verbraucht werden, d. h. daß keine Reststücke des teuren Elektrodenkörpermaterials mehr anfallen.

Neben senkrecht von oben in die Glasschmelze eintauchenden Elektroden sind auch schräg von oben und von der Seite her eintauchende Elektroden gebräuchlich. Bei diesen sieht die Erfindung vor, daß die Verdickung unsymmetrisch und in größerem Maße an der Elektrodenkörper-Unterseite ausgebildet ist, um der dort nach praktischen Erfahrungen stärksten Elektrodenkörper-Abnutzung entgegenzuwirken.

Hinsichtlich der Größenordnung der Verdickungen ist, unabhängig von der Formgebung im Einzelfall, vorgesehen, daß die Dicke bzw. der Durchmesser des Elektrodenkörpers im Bereich seiner maximalen Verdickung 20 - 100 % größer ist als die Grunddicke bzw. der Grunddurchmesser des Elektrodenkörpers.

Ausführungsbeispiele der Erfindung werden im folgenden anhand einer Zeichnung erläutert. Die Figuren der Zeichnung zeigen:
- Figur 1: eine Elektrode in Seitenansicht, teils im Anschnitt,
- Figur 2: den Verbindungsbereich von Elektrodenschaft und Elektrodenkörper in vergrößerter Darstellung im Längsschnitt, teils in Ansicht, und
- Figuren 3 bis 6: den Elektrodenkörper in drei unterschiedlichen Ausführungen in Ansicht.

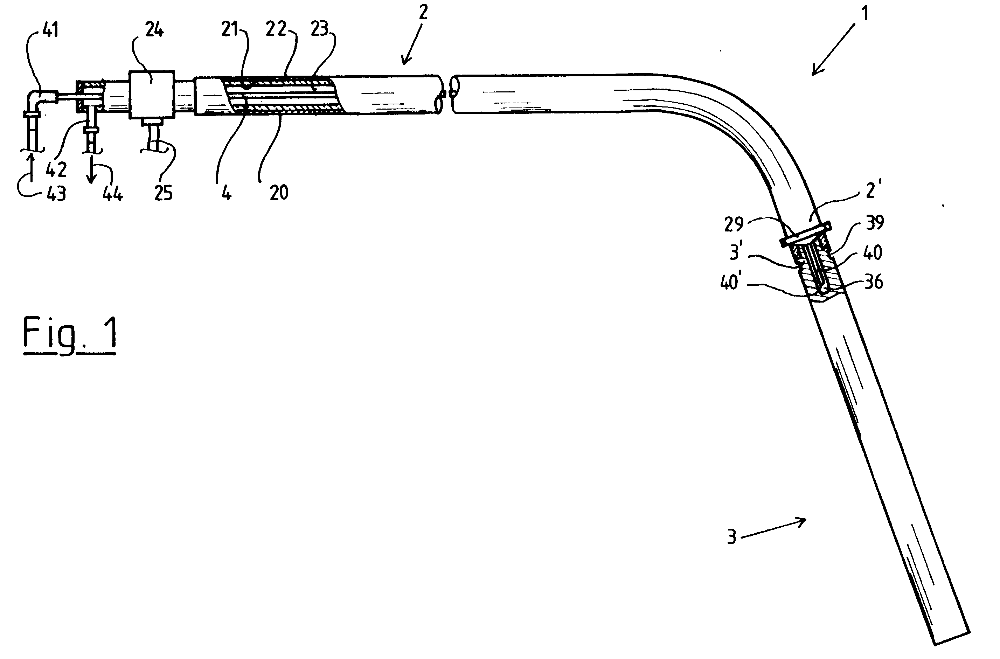

Wie die Figur 1 der Zeichnung zeigt, besteht das in dieser Figur dargestellte erste Ausführungsbeispiel der Elektrode 1 aus einem Elektrodenschaft 2 und einem mit diesem verschraubten Elektrodenkörper 3. Der Elektrodenschaft 2 besteht im wesentlichen aus einem Koaxialrohr 20, welches aus einem Innenrohr 21 aus Kupfer und einem Außenrohr 22 aus Stahl gebildet ist. Über den größten Teil seiner Länge ist der Elektrodenschaft 2 gerade ausgeführt und in seinem in Figur 1 rechten, ofenseitigen Endbereich 2′ nach unten hin gebogen.

An dem in Figur 1 linken, d. h. ofenäußeren Ende des Elektrodenschaftes 2 ist das Außenrohr 22 verkürzt, so daß das Kupferinnenrohr 21 von außen zugänglich ist. In diesem Bereich ist mittels eines Stromanschlußblocks 24 ein Stromkabel 25 zur Stromeinspeisung elektrisch leitend mit dem Innenrohr 21 verbunden. Aufgrund seiner guten elektrischen Leitfähigkeit trägt das Innenrohr 21 den wesentlichen Teil der Stromleitung, während das stählerne Außenrohr 22 im wesentlichen für die mechanische Stabilität des Elektrodenschaftes 2 sorgt. Selbstverständlich erfolgt ein geringerer Teil der Stromleitung auch durch das Außenrohr 22 und es wird auch ein geringerer Teil der mechanischen Lasten von dem Innenrohr 21 aufgenommen.

Durch das hohle Innere 23 des Koaxialrohres 20 verläuft eine Kühlflüssigkeitsleitung 4, die am linken Ende des Elektrodenschaftes 2 aus diesem herausgeführt ist. Über einen Zulaufanschluß 41 kann Kühlflüssigkeit, z. B. Kühlwasser, im Sinne des Strömungspfeils 43 in die Kühlflüssigkeitsleitung 4 eingespeist werden. Der Rücklauf der Kühlflüssigkeit erfolgt durch den Zwischenraum zwischen der Außenseite des Kühlflüssigkeitsrohres 4 und der Innenseite des Innenrohres 21 des Koaxialrohres 20. Über einen am linken Ende in radialer Richtung weisend am Elektrodenschaft angebrachten Auslaufanschluß 42 kann die erwärmte, rücklaufende Kühlflüssigkeit im Sinne des Strömungspfeiles 44 abgezogen werden.

Der Elektrodenkörper 3 ist bei dem in Figur 1 dargestellten Ausführungsbeispiel der Elektrode 1 als länglich-zylindrischer Stab konstanten Außendurchmessers ausgebildet. Er besteht aus einem hochhitzebeständigem Metall, wie Molybdän, Platin, Wolfram oder deren Legierungen. Das obere, dem Elektrodenschaft 2 zugewandte Ende des Elektrodenkörpers 3 ist als Anschraubende 3′ mit einem Außengewinde ausgebildet. Entsprechend ist das dem Elektrodenkörper 3 zugewandte Ende des Elektrodenschaftes 2 mit einem Innengewinde zur Aufnahme des Anschraubendes 3′ des Elektrodenkörpers 3 ausgebildet. Um eine mechanisch feste Verbindung des Elektrodenschaftes 2 und des Elektrodenkörpers 3 herstellen zu können, besitzt das Ende 2′ des Elektrodenschaftes 2 einen fest angebrachten, z. B. angeschweißten Sechskantring 29, der zur Aufnahme eines entsprechenden Schraubenschlüssels dient. Der Elektrodenkörper 3 ist nahe seinem Anschraubende 3′ mit zwei Schlüsselflächen 39 versehen, die ebenfalls das Ansetzen eines Schraubenschlüssels ermöglichen.

Weiterhin ist aus der Figur 1 ersichtlich, daß der Elektrodenkörper 3 im Bereich seines Anschraubendes 3′ mit einer zentralen Bohrung 36 versehen ist, die sich über einen kleineren Teil der Länge des Elektrodenkörpers 3 mittig in diesen erstreckt. In diese Bohrung 36 ragt das elektrodenkörperseitige Ende 40 des Kühlflüssigkeitsrohres 4 hinein und endet im Abstand vom Boden der Bohrung 36 in einem Kühlflüssigkeitsauslaß 40′. Damit wird die durch das Kühlflüssigkeitsrohr 4 zugeführte Kühlflüssigkeit bis in den oberen Teil des Elektrodenkörpers 3 geleitet, von wo aus sie zunächst durch den äußeren Teil der Bohrung 36 und anschließend durch den Zwischenraum zwischen dem Kühlflüssigkeitsrohr 4 und dem Innenrohr 21 des Elektrodenschaftes 2 wieder zurückläuft.

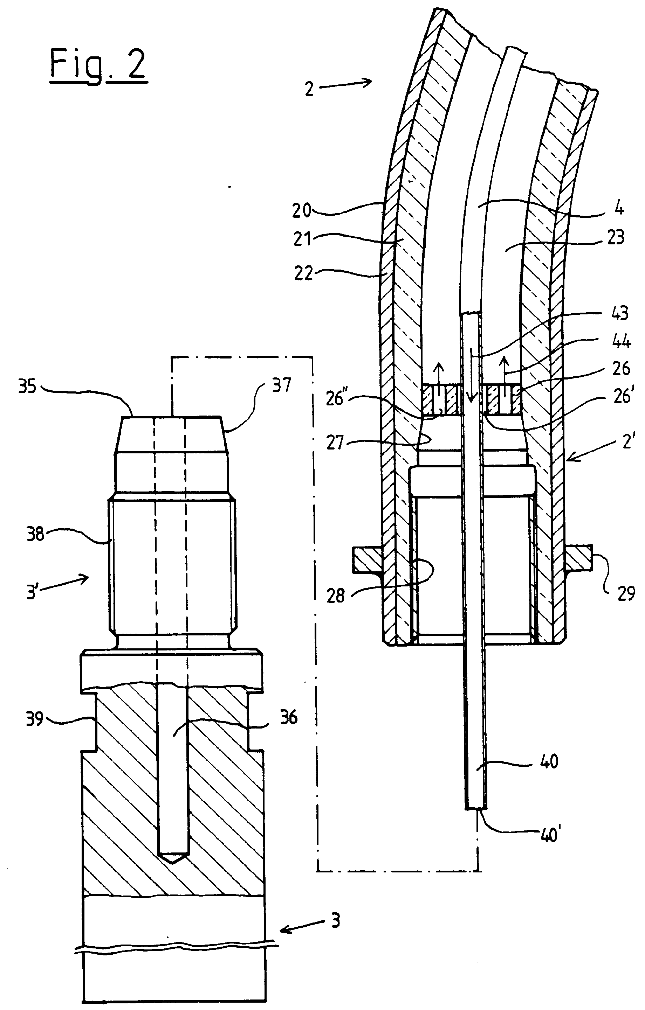

Figur 2 der Zeichnung zeigt den Verbindungsbereich zwischen Elektrodenschaft 2 und Elektrodenkörper 3 im Detail, wobei zur Erzielung einer übersichtlichen Darstellung die beiden Teile 2 und 3 voneinander getrennt dargestellt sind.

Der Elektrodenschaft 2 besteht, wie zuvor schon erläutert, aus dem Koaxialrohr 20 mit dem kupfernen Innenrohr 21 und dem stählernen Außenrohr 22. Zentral durch das hohle Innere 23 des Koaxialrohres 20 verläuft das Kühlflüssigkeitsrohr 4.

Am unteren, d. h. ofeninneren Ende 2′ des Elektrodenschaftes 2 ist außen auf das Außenrohr 22 der Sechskantring 29 aufgeschweißt, der als Schraubenschlüsselaufnahme bei der Montage der Elektrode dient. Das Innenrohr 21 ist am Ende 2′ des Elektrodenschaftes 2 mit dem Innengewinde 28 versehen, welches zur Aufnahme des entsprechenden Außengewindes 38 des Elektrodenkörpers 3 dient. Oberhalb des Gewindes 28 ist das Innenrohr 21 mit einer Innenkonusfläche 27 versehen, die bei eingeschraubten Elektrodenkörper 3 in innige Verbindung mit einer passend gegengeformten Außenkonusfläche 37 am oberen Ende 3′ des Elektrodenkörpers 3 tritt. Die beiden aneinander anliegenden Konusflächen 27 und 37 dienen zum einen einer Sicherstellung einer möglichst widerstandsarmen Stromleitung vom Elektrodenschaft 2 zum Elektrodenkörper 3 und zum anderen zur mechanischen Sicherung der Schraubverbindung zwischen Schaft 2 und Körper 3.

Oberhalb der Konusfläche 27 ist in das Innenrohr 21 des Koaxialrohres 20 eine Lochplatte 26 fest eingesetzt, die mit mehreren Durchbrechungen 26′ und 26˝ versehen ist, die jeweils in axialer Richtung verlaufen. Die Durchbrechung 26′ ist zentral in der Lochplatte 26 angeordnet und dient zur Zentrierung und Führung des Kühlflüssigkeitsrohres 4. Um die zentrale Öffnung 26′ herum sind mehrere weitere Öffnungen 26˝ angeordnet, die zur Führung der rücklaufenden Kühlflüssigkeit im Sinne des Strömungspfeiles 44 dienen. Der Vorlauf der Kühlflüssigkeit erfolgt, wie bereits erläutert, im Sinne des Strömungspfeiles 43 durch das Innere des Kühlflüssigkeitsrohres 4.

Besonders deutlich ist aus der Figur 2 ersichtlich, daß das Kühlflüssigkeitsrohr 4 sich im Bereich seines unteren, d. h. elektrodenkörperseitigen Endes 40 um ein bestimmtes Maß über das Koaxialrohr 20 hinaus erstreckt. An seinem äußersten Ende ist das Kühlflüssigkeitsrohr 4 zur Bildung eines Kühlflüssigkeitsauslasses 40′ offen endend ausgebildet.

Das äußerste obere Ende des Elektrodenkörpers 3 bildet eine kreisringförmige Stirnseite 35, von welcher ausgehend sich die zentrale Bohrung 36 in den Elektrodenkörper 3, genauer in dessen Anschraubende 3′, hineinerstreckt. In zusammengeschraubtem Zustand von Elektrodenschaft 2 und Elektrodenkörper 3 liegt die Stirnseite 35 in einem geringen, für einen Kühlflüssigkeitsdurchlaß ausreichenden Abstand vor der unteren Stirnseite der Lochplatte 26. Das den Kühlflüssigkeitsauslaß 40′ aufweisende Ende 40 des Kühlflüssigkeitsrohres 4 liegt dann, wie bereits erwähnt, im Abstand vom Boden der Bohrung 36 in dieser.

Schließlich zeigt die Figur 2 im oberen Teil des Elektronenkörpers 3 noch die beiden in dessen Umfang eingeschnittenen Schlüsselflächen 39.

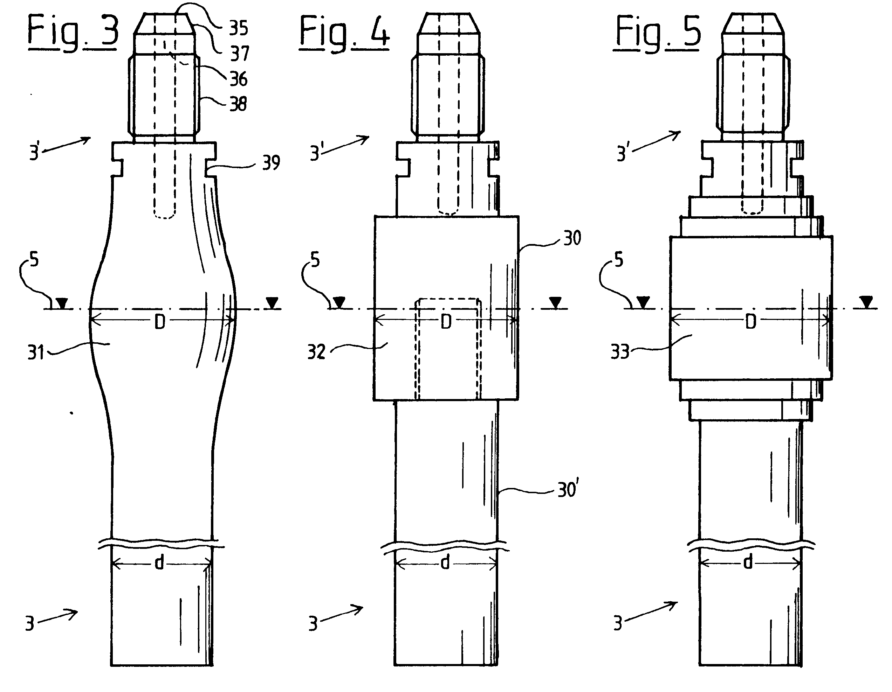

In den Figuren 3, 4 und 5 der Zeichnung sind drei unterschiedliche Elektrodenkörper 3 als Teil der Elektrode gemäß Erfindung dargestellt. Gemeinsam ist sämtlichen hier beispielhaft dargestellten Elektrodenkörpern 3, daß sie in ihrem Verlauf eine Verdickung 31, 32, 33 aufweisen.

Bei dem ersten Ausführungsbeispiel nach Figur 3 ist der Elektrodenkörper 3 in seiner Grundform länglich-zylindrisch mit einem Grunddurchmesser d. Im oberen Teil dieses zylindrischen Elektrodenkörpers 3 ist dieser mit der Verdickung 31 versehen, die hier bauchig ausgeführt, d. h. mittels stetiger Durchmesserveränderungen realisiert ist. Der größte Durchmesser D des Elektrodenkörpers 3 im Bereich seiner maximalen Verdickung liegt im wesentlichen in der Höhe des Elektrodenkörpers 3, in welcher sich bei Betrieb der Elektrode 1 ein Glasschmelzespiegel 5 des Glasschmelzofens befindet. Durch diese Verdickung 31 wird dem in diesem Bereich des Elektrodenkörpers 3 größten Verschleiß Rechnung getragen.

Im Bereich des Anschraubendes 3′ dieses Elektrodenkörpers 3 sind wieder die Stirnseite 35 mit der von dort ausgehenden Bohrung 36, die Außenkonusfläche 37, das Außengewinde 38 und die beiden Schlüsselflächen 39 erkennbar, wie sie zuvor bereits beschrieben wurden.

Bei dem zweiten Ausführungsbeispiel des Elektronenkörpers 3 nach Figur 4 ist das Anschraubende 3′ ebenso ausgeführt wie bei dem zuvor beschriebenen Ausführungsbeispiel. Weiterhin ist auch hier die Grundform des Elektrodenkörpers 3 länglich-zylindrisch mit einem Grunddurchmesser d. Die Verdickung 32 hat hier eine zylindrische Form, d. h. sie ist mittels eines sich stufenweise verändernden Durchmessers ausgeführt. Der Durchmesser des Elektrodenkörpers 3 ändert sich demnach in zwei Stufen vom kleineren Durchmesser d zum größeren Durchmesser D bzw. vom größeren Durchmesser D wieder zum kleineren Grund-Durchmesser d. Der fiktive Glasschmelzespiegel 5 liegt hier im wesentlichen in der Mitte des verdickten Teils des Elektrodenkörpers 3.

Weiterhin ist bei diesem Ausführungsbeispiel des Elektrodenkörpers 3 vorgesehen, daß dieser aus zwei miteinander verschraubten Teilen 30 und 30′ zusammengesetzt ist. Der Verschraubungsbereich ist dabei durch gestrichelte Linien im Inneren des oberen, die Verdickung 32 darstellenden Teils 30 des Elektrodenkörpers 3 angedeutet. Diese Ausführung des Elektrodenkörpers 3 ermöglicht ein Baukastensystem, d. h. es können unterschiedliche Elektrodenkörper 3 aus einzelnen Elektrodenkörperteilen 30 und 30′ zusammengesetzt werden. Deren Dicken sowie Längen können dabei nach dem Einsatzzweck und dem chemischen Verhalten der Glasschmelze optimal ausgewählt werden.

Als drittes Ausführungsbeispiel ist in Figur 5 ein Elektrodenkörper 3 dargestellt, dessen Grundform ebenfalls wieder länglich-zylindrisch mit einem Durchmesser d ist. Die Verdickung ist hier durch eine in mehreren Stufen erfolgende Änderung des Durchmessers des Elektrodenkörpers 3 bis zu einem maximalen Durchmesser D realisiert. Im Betrieb liegt der Glasschmelzespiegel 5 auch bei diesem Elektrodenkörper 3 in der Mitte des Teils des Elektrodenkörpers mit dem größten Durchmesser D.

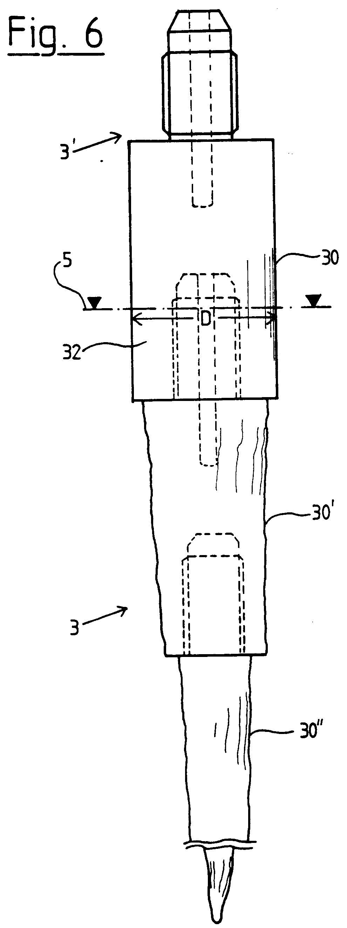

Figur 6 der Zeichnung schließlich zeigt einen Elektrodenkörper 3, der aus drei Elektrodenkörperteilen 30, 30′ und 30˝ zusammengeschraubt ist. Die beiden unteren Elektrodenkörperteile 30′ und 30˝ sind, wie aus der Darstellung entnehmbar ist, bereits über längere Zeit in einem Glasschmelzofen im Einsatz gewesen, wodurch sich deren Durchmesser sowie die Länge des unteren Elektrodenteils 30˝ vermindert haben und wodurch die Oberfläche der beiden Elektrodenkörperteile 30′ und 30˝ unregelmäßig geworden ist.

Der obere Elektrodenkörperteil 30 ist dagegen ein Neuteil, das auf den alten, durch die beiden unteren Elektrodenkörperteile 30′ und 30˝ gebildeten Elektrodenkörper nach dessen Abnehmen von dem hier nicht dargestellten Elektrodenschaft aufgeschraubt ist. Dabei stellt der neue Elektrodenkörperteil 30 die Verdickung 32 dar. Das Anschlußende 3′ entspricht hier wieder im wesentlichen den zuvor bereits beschriebenen Anschlußenden.

Durch dieses nachträgliche Einfügen eines neuen, verdickten Elektrodenkörperteils 30 wird ein neuer Elektrodenkörper 3 gebildet, der wieder für eine längere Betriebszeit innerhalb eines Glasschmelzofens einsetzbar ist. Der Glasschmelzespiegel 5 liegt nach dem Einfügen des neuen Elektrodenkörperteils 30 in dessen Bereich, d. h. im Bereich der maximalen Dicke D des neu gebildeten Elektrodenkörpers 3.

Selbstverständlich können die Elektrodenkörper 3 auch in Plattenform ausgebildet sein, wobei diese dann eine Grunddicke d sowie entsprechende Verdickungen mit einer Dicke D aufweisen.

## Patentansprüche

1. Elektrode für einen Glasschmelzofen, welche aus einem von außen her oberhalb der Glasschmelze in das Innere des Glasschmelzofens einzuführenden metallischen Elektrodenschaft (2) und einem mit dem ofeninneren Ende des Schaftes (2) verbundenen, z.B. verschraubten, zum größten Teil in die Glasschmelze im Glasschmelzofen einzutauchenden Elektrodenkörper (3) aus hochhitzebeständigem Metall, wie Molybdän, Platin, Wolfram oder deren Legierungen, besteht, wobei der Elektrodenschaft (2) ofenaußenseitig an eine Stromquelle anschließbar ist, wobei der Elektrodenschaft (2) hohl als Rohr ausgebildet ist, wobei im hohlen Inneren des Elektrodenschaftes (2) ein Kühlflüssigkeitsrohr (4) verläuft, durch welches eine Kühlflüssigkeit von außen her zum ofeninneren Ende des Elektrodenschaftes (2) führbar ist, wobei die Kühlflüssigkeit durch einen zwischen der Außenseite des Kühlflüssigkeitsrohres (4) und der Innenseite des Elektrodenschaftes (2) gebildeten Zwischenraum (23) rückleitbar ist,
**dadurch** **gekennzeichnet**,
daß der Elektrodenschaft (2) als Koaxialrohr (20) mit einem Innenrohr (21) aus einem einen guten elektrischen Leiter darstellenden Metall und mit einem Außenrohr (22) aus einem mechanisch widerstandsfähigen, hitzebeständigen Metall ausgebildet ist, wobei der Zwischenraum (23) für die Rückleitung der Kühlflüssigkeit zwischen der Außenseite des Kühlflüssigkeitsrohres (4) und der Innenseite des Innenrohres (21) gebildet ist.

2. Elektrode nach Anspruch 1, dadurch gekennzeichnet, daß das Innenrohr (21) aus Kupfer oder Kupferlegierung und das Außenrohr (22) aus Stahl oder Stahllegierung besteht.

3. Elektrode nach Anspruch 1 oder 2, dadurch gekennzeichnet, daß im Verbindungsbereich von Elektrodenschaft (2) und Elektrodenkörper (3) das Innenrohr (21) des Elektrodenschaftes (2) mit einer Innenkonusfläche (27) und das zugehörige Ende (3′) des Elektrodenkörpers (3) mit einer gegengeformten Außenkonusfläche (37) ausgebildet ist.

4. Elektrode nach einem der vorhergehenden Ansprüche, dadurch gekennzeichnet, daß der Elektrodenkörper (3) eine von seiner dem Elektrodenschaft (2) zugewandten Stirnseite (35) ausgehende, sich über einen Teil der Länge des Elektrodenkörpers (3) in diesen hinein erstreckende Bohrung (36) aufweist und daß das durch das hohle Innere (23) des Elektrodenschaftes (2) verlaufende Kühlflüssigkeitsrohr (4) bis in die Bohrung (36) im Elektrodenkörper (3) geführt und dort im Abstand vom Boden der Bohrung (36) endend als Kühlflüssigkeitsauslaß (40′) ausgebildet ist.

5. Elektrode nach einem der vorhergehenden Ansprüche, dadurch gekennzeichnet, daß unmittelbar vor dem Verbindungsbereich von Elektrodenkörper (3) und Elektrodenschaft (2) in dessen hohles Inneres (23) eine Lochplatte (26) fest eingesetzt ist, die eine zentrale, das Kühlflüssigkeitsrohr (4) zentrierend führende Öffnung (26′) sowie mehrere darum verteilt angeordnete Durchlaßöffnungen (26˝) für die rücklaufende Kühlflüssigkeit aufweist.

6. Elektrode nach einem der vorhergehenden Ansprüche, dadurch gekennzeichnet, daß der Elektrodenkörper (3) eine länglich-plattenförmige oder länglich-zylindrische Grundform aufweist und in der Umgebung des Körperbereiches, der im Betrieb der Elektrode (1) im Glasschmelzofen in Höhe des Glasschmelzespiegels (5) zu liegen kommt, eine Verdickung (31, 32, 33) aufweist.

7. Elektrode nach Anspruch 6, dadurch gekennzeichnet, daß die Verdickung (31) bauchig mit kontinuierlichen Dicken- bzw. Durchmesseränderungen ausgebildet ist.

8. Elektrode nach Anspruch 6, dadurch gekennzeichnet, daß die Verdickung (32, 33) mit stufenförmigen Dicken- bzw. Durchmesseränderungen ausgebildet ist.

9. Elektrode nach Anspruch 8, dadurch gekennzeichnet, daß der Elektrodenkörper (3) aus wenigstens zwei miteinander verbundenen Elektrodenkörperteilen (30, 30′, 30˝) unterschiedlicher Dicken und/oder Durchmesser (d, D) zusammengesetzt ist.

10. Elektrode nach einem der Ansprüche 6 bis 9, dadurch gekennzeichnet, daß bei schräg in die Glasschmelze einzutauchenden Elektrodenkörpern (3) die Verdickung (31, 32, 33) unsymmetrisch und in größerem Maße an der Elektrodenkörper-Unterseite ausgebildet ist.

11. Elektrode nach einem der Ansprüche 6 bis 10, dadurch gekennzeichnet, daß die Dicke bzw. der Durchmesser (D) des Elektrodenkörpers im Bereich seiner maximalen Verdickung (31, 32, 33) 20 - 100 % größer ist als die Grunddicke bzw. der Grunddurchmesser (d) des Elektrodenkörpers (3).

## Claims

1. An electrode for a glass melting furnace consisting of a metallic electrode shank (2) to be inserted from the outside above the glass melt into the interior of the glass melting furnace, and an electrode body (3) connected i.e. by screwing with the inner end of the shank (2) in the furnace and to be immersed with the largest part thereof into the glass melt with the electrode body (3) made of high heat-resistant metal like molybdenum, platinum, tungsten or the alloys thereof, wherein the electrode shank (2) is connectible at the outside of the furnace to an electric power supply, wherein the electrode shank (2) is shaped hollow as a tube, wherein in the hollow interior of the electrode shank (2) a cooling liquid pipe (4) is provided, wherethrough a cooling liquid from the outside is guidable to the inner end of the electrode shank (2) in the furnace, wherein the cooling liquid is recyclable through an intermediate chamber formed between the outside of the cooling liquid pipe (4) and the inner side of the electrode shank (2),
**characterized** **in**
that the electrode shank (2) is formed as a coaxial tube (20) with an inner tube (21) of a metal with a good electrical conductivity and an outer tube (22) of a mechanically and heat-resistant metal, wherein the intermediate chamber (23) for recycling the cooling liquid is formed between the outside of the cooling liquid pipe (4) and the inner side of the inner tube (21).

2. Electrode according to claim 1, characterized in that the inner tube (21) consists of copper or copper alloy and the outer tube (22) consists of steel or steel alloy.

3. Electrode according to claim 1 or 2, characterized in that in the connection area of the electrode shank (2) and the electrode body (3) the inner tube (21) of the electrode shank (2) is formed with an inner conical surface (27) and the associated end (3′) of the electrode body (3) is formed with a corresponding outer conical surface (37).

4. Electrode according to one of the preceeding claims, characterized in that the electrode body (3) comprises a boring (36) extending from the front face (35) of the electrode body (3) facing the electrode shank (2) through a part of the length of the electrode body (3) into the interior thereof, and that the cooling liquid pipe (4) extending through the hollow interior (23) of the electrode shank (2) is guided into the boring (36) in the electrode body (3) and ends spaced from the bottom of the boring (36) and is formed as a cooling liquid outlet (40′).

5. Electrode according to one of the preceeding claims, characterized in that directly in front of the connection area of the electrode body (3) and the electrode shank (2) in the hollow interior (23) thereof an apertured plate (26) is secured comprising a central aperture (26′) which centrally guides the cooling liquid pipe (4) and comprising several passage apertures (26˝) arranged there about for the recycling cooling liquid.

6. Electrode according to one of the preceeding claims, characterized in that the electrode body (3) comprises an elongated plate-like or elongated cylindrical base form and a thickening (31, 32, 33) near the area of the body which during the operation of the electrode (1) in the glass melting furnace is situated in the altitude of the glass melt level (5).

7. Electrode according to claim 6, characterized in that the thickening is bulged with a continous change of diameter or thickness, respectively.

8. Electrode according to claim 6, characterized in that the thickening (32, 33) is shaped with a stepped change of diameter or thickness, respectively.

9. Electrode according to claim 8, characterized in that the electrode body (3) is constructed of at least two connected electrode body members (30, 30′, 30˝) with different thicknesses and/or diameters d, D.

10. Electrode according to one of the claims 6 to 9, characterized in that with an electrode body (3) immersed inclined into the glass melt the thickening (31, 32, 33) is assymetric and to a larger extent is formed at the underside of the electrode body.

11. Electrode according to one of the claims 6 to 10, characterized in that the thickness or the diameter D, respectively, of the electrode body in the area of the maximal thickening (31, 32, 33) is 20 % to 100 % larger than the base thickness or base diameter d, respectively, of the electrode body (3).

## Revendications

1. Electrode pour four de fusion de verre qui se compose d'un adaptateur métallique (2) d'électrode à introduire de l'extérieur, au-dessus du bain de verre, vers l'intérieur du four de fusion de verre, et d'un corps (3) d'électrode à plonger pour sa majeure partie dans le bain de verre dans le four de fusion de verre, relié, par exemple, vissé, à l'extrémité de l'adaptateur (2) située à l'intérieur du four et consistant en un métal hautement réfractaire comme du molybdène, du platine, du tungstène ou leurs alliages, l'adaptateur (2) d'électrode pouvant être raccordé à une source de courant sur le côté extérieur au four, l'adaptateur (2) d'électrode étant réalisé sous forme de tube, un tube (4) de fluide de refroidissement à travers lequel un fluide de refroidissement peut être introduit de l'extérieur vers l'extrémité inférieure au four de l'adaptateur (2) d'électrode étant situé dans l'intérieur creux de l'adaptateur (2) d'électrode, le fluide de refroidissement pouvant être renvoyé à travers un espace intermédiaire (23) formé entre le côté extérieur du tube (4) de fluide de refroidissement et le côté intérieur de l'adaptateur (2) d'électrode,
caractérisée en ce que
l'adaptateur (2) d'électrode est réalisé sous forme de tube coaxial (20) comprenant un tube intérieur (21) en un métal qui constitue un bon conducteur électrique et un tube extérieur (22) en un métal réfractaire à haute résistance mécanique, l'espace intérieur (23) de renvoi du liquide de refroidissement étant formé entre le côté extérieur du tube (4) de fluide de refroidissement et le côté intérieur du tube intérieur (21).

2. Electrode selon la revendication (1), caractérisée en ce que le tube intérieur (21) est en cuivre ou en un alliage de cuivre et le tube extérieur (22) est en acier ou en un alliage d'acier.

3. Electrode selon la revendication 1 ou 2, caractérisée en ce que, dans la zone de liaison entre l'adaptateur (2) d'électrode et le corps (3) d'électrode, le tube intérieur (21) de l'adaptateur (2) d'électrode présente une surface intérieure conique (27) et l'extrémité associée (3′) du corps (3) d'électrode présente une surface conique extérieure de forme opposée.

4. Electrode selon l'une des revendications précédentes, caractérisée en ce que le corps (3) d'électrode présente un alésage (36), qui part de sa paroi frontale (35) tournée vers l'adaptateur (2) d'électrode et s'étend sur une partie de la longueur du corps (3) d'électrode dans ce dernier, et en ce que le tube (4) de fluide de refroidissement dont le tracé traverse l'intérieur creux (23) de l'adaptateur (2) d'électrode est guidé jusque dans l'alésage (36) dans le corps (3) d'électrode et y est réalisé sous forme de sortie (40′) de liquide de refroidissement, en se terminant à distance du fond de l'alésage (36).

5. Electrode selon l'une des revendications précédentes caractérisée en ce qu'une plaque perforée (26), dans laquelle sont ménagées une ouverture centrale (26′) qui guide le tube (4) de fluide de refroidissement en le centrant ainsi que plusieurs ouvertures de sortie (26′) disposées de façon répartie autour de celle-ci et destinées au fluide de refroidissement renvoyé, est fixée de façon ferme immédiatement avant la zone de liaison du corps (3) d'électrode et de l'adaptateur (2) d'électrode dans le corps intérieur creux (23) de celui-ci.

6. Electrode selon l'une des revendications précédentes, caractérisée en ce que le corps (3) d'électrode présente une forme de base en plate-forme allongée ou en cylindre allongé et comporte un épaississement (31, 32, 33) au voisinage de la zone de corps qui vient reposer à la hauteur de la surface (5) de bain de verre pendant le fonctionnement de l'électrode (1) dans le four à fusion de verre.

7. Electrode selon la revendication 6, caractérisée en ce que l'épaississement (31) est réalisé de façon bombée, les variations d'épaisseur ou de diamètre étant continues.

8. Electrode selon la revendication 6, caractérisée en ce que l'épaississement (32, 33) est réalisé en présentant des variations d'épaisseur et de diamètre en forme de gradins.

9. Electrode selon la revendication 8, caractérisée en ce que le corps (3) d'électrode est composé d'au moins deux parties (30, 30′, 30˝) de corps d'électrode reliées entre elles dont les épaisseurs et/ou les diamètres (d, D) diffèrent.

10. Electrode selon l'une des revendications 6 à 9, caractérisée en ce que l'épaississement (31, 32, 33) est réalisé, pour des corps (3) d'électrode à plonger en oblique dans le bain de fusion, d'une manière dissymétrique, et en majeure partie sur le côté inférieur du corps d'électrode.

11. Electrode selon l'une des revendications 6 à 10, caractérisée en ce que l'épaisseur ou le diamètre (D) du corps d'électrode est supérieur d'environ 20 à 100%, dans la zone de son épaisseur maximale (31, 32, 33), à l'épaisseur de base ou au diamètre de base (d) du corps (3) d'électrode.
